# EUROPÄISCHE PATENTSCHRIFT

(11) **EP 0 406 535 B1**
(45) Veröffentlichungstag und Bekanntmachung des Hinweises auf die Patenterteilung: **31.03.1993**
(21) Anmeldenummer: 90108301.4
(22) Anmeldetag: 02.05.1990
(51) Int. Cl.: B29B 9/06, B29B 13/06

(54) **Granulatnachbehandlungsanlage**
Apparatus for post-treating pellets
Appareil de post-traitement de granulés

(30) Priorität: 01.07.1989 DE 3921685
(43) Veröffentlichungstag der Anmeldung: 09.01.1991
(73) Patentinhaber: Werner & Pfleiderer GmbH, 70469 Stuttgart (DE)
(72) Erfinder: Grimminger, Albert, Dipl.-Ing., D-7250 Leonberg 7 (DE); Müller, Franz Josef, Dipl.-Ing., D-7120 Bietigheim-Bissingen (DE); Schlipf, Edgar, Dipl.-Ing. (FH), D-7000 Stuttgart 50 (DE)

(56) Entgegenhaltungen:
- DE-C- 3 722 684
- FR-A- 1 557 367
- US-A- 3 393 425
- US-A- 3 477 098
- US-A- 4 385 016

## Beschreibung

Die Erfindung betrifft eine Granulatnachbehandlungsanlage für Kunststoffgranulat nach dem Oberbegriff des Anspruches 1.

Bei der Massenherstellung von Kunststoffen hat sich die Unterwassergranulierung bzw. die wassergekühlte Granulierung größtenteils durchgesetzt. Beim Anfahren, Abstellen und bei eventuellen Störungen an den Dosiereinrichtungen für die Rohstoffeinführung entsteht Fehlgranulat. Schon geringe Mengen an Fehlgranulat können, wenn sie über den Trockner in den Vorratsbehälter gelangen, große Mengen von regulärem Granulat wertlos machen. Zur Aussonderung des Fehlgranulats ist nach der Granuliereinrichtung in der Nachbehandlungsstrecke eine Anfahrweiche vorgesehen, über welche das Fehlgranulat abgezweigt wird.

In der DE-AS 12 76 324 ist z.B. eine solche Anfahrweiche beschrieben, die aus einem in der Kühlwasserleitung zwischen dem Granulierkopf und dem Wasserabscheider vorgesehenen Abzweig mit einer steuerbaren Klappe besteht. Die Klappe sperrt beim Anfahren und Abstellen der Anlage und bei Betriebsstörungen die Leitung zum Wasserabscheider und gibt eine Zweigleitung zum Ausschleusen des Fehlgranulats frei.
Der Abzweig kann beispielsweise aus einem T- oder Y-förmigen Rohrstück bestehen, in dessen Inneren die Klappe schwenkbar angeordnet ist. Die Zweigleitung führt zu einem zweiten Wasserabscheider, dessen Wasserableitung mit der Kühlwasserumlaufleitung verbunden ist. Nachteilig bei dieser Anordnung ist, daß für die Granulatnachbehandlung viel Platz für die einzelnen Einrichtungen benötigt wird. Ferner ist es zwar auch bekannt, (DE-OS 28 50 584) für einen Trenn- und Trockenraum im Schüttguteinlaß ein Sieb anzuordnen, welches eine Vorentwässerung bewirkt. Nachteilig hierbei ist, daß die Vorentwässerung nicht regelbar ist. Außerdem ist bei dieser Vorrichtung eine Anfahrweiche überhaupt nicht vorgesehen.

Der Erfindung liegt die Aufgabe zugrunde, den Anlagenaufwand für die Nachbehandlung von nassem Kunststoffgranulat zu verringern und den Kühl- und Trocknungsablauf des Granulates zu verbessern.

Diese Aufgabe wird nach der Erfindung gemäß den kennzeichnenden Merkmalen des Patentanspruches 1 gelöst. Weitere vorteilhafte Ausgestaltungen der Erfindung ergeben sich aus den Unteransprüchen.
Durch die erfindungsgemäße Zusammenlegung der Anfahrweiche und Vorentwässerung zu einem einteiligen Bauteil am Trocknereinlauf, ergeben sich neben der erheblichen Verkürzung der Granulatnachbehandlungsstrecke noch weitere Einsparungen an Bauteilen durch die gemeinsame Entsorgung der gesamten Anlage über austauschbare Siebkassetten in nur einem Wassertank.
Entsprechend der Ausgestaltung nach Anspruch 2 ist die Umstellung von der Entsorgung des Fehlgranulates zur Vorentwässerung des Granulat-Wassergemisches durch einfache Verdrehung des Drehrohres gegeben. Dabei ist in weiterer Ausgestaltung der Erfindung nach Anspruch 3 die Vorentwässerung des Granulat-Wassergemisches von 0 bis nahezu 100% möglich. Hierdurch ist eine optimale Anpassung der Vorentwässerung an unterschiedliche Betriebsbedingungen und/oder unterschiedlichen Granulateigenschaften gegeben. Ein weiterer Vorteil der Erfindung ergibt sich in einer Ausbildung nach Anspruch 4 wonach das im Trockner abgeschiedene Restwasser des Granulates ebenfalls in den Wassertank der Vorentwässerung abgeleitet wird. Gemäß der Ausgestaltung nach Anspruch 5 ist ein beliebiger Standort der Granulatnachbehandlungsanlage zur Granuliereinrichtung sowie eine unterschiedlichen Kunststoffgranulatprodukten angepaßte Länge der Kühlwasserstrecke frei wählbar.

Entsprechend einer Ausgestaltung der Erfindung nach Anspruch 6, ist die Granulatnachbehandlungsanlage auch bei großen Durchsatzmengen ohne größeren Aufwand vorteilhaft einsetztbar.

Gemäß der Ausgestaltung nach Anspruch 7 können keine Verklemmungen der verschiebbaren Rinne durch Kunststoffgranulat oder andere Verunreinigungen eintreten.

Schließlich gibt die Ausgestaltung nach Anspruch 8 einen vorteilhaften Antrieb für die Verstellung des Bauteiles insbesondere für Großanlagen an.

Die Erfindung ist nachfolgend an Hand der in den Zeichnungen dargestellten Ausführungsbeispielen näher erläutert. Hierzu zeigt:
- Fig. 1: eine Granulatnachbehandlungsanlage mit Drehrohrausführung in Vorderansicht
- Fig. 2: eine Seitenansicht des Drehrohres mit Einlaufkasten und Wassertank in Vorentwässerungsstellung
- Fig. 3: eine Seitenansicht des Drehrohres nach Fig. 2 in Anfahrstellung
- Fig. 4: eine Seitenansicht des Drehrohres nach Fig. 2 bei einer teilweisen Vorentwässerung
- Fig. 5: eine weitere Ausbildung der Granulatnachbehandlungsanlage in Vorderansicht mit verschiebbarer Rinne in Vorentwässerungsstellung im Schnitt
- Fig. 6: einen Schnitt I-I gemäß Fig. 5
- Fig. 7: gemäß Fig. 5 die Stellung der Rinne für die Fehlgranulatentsorgung.

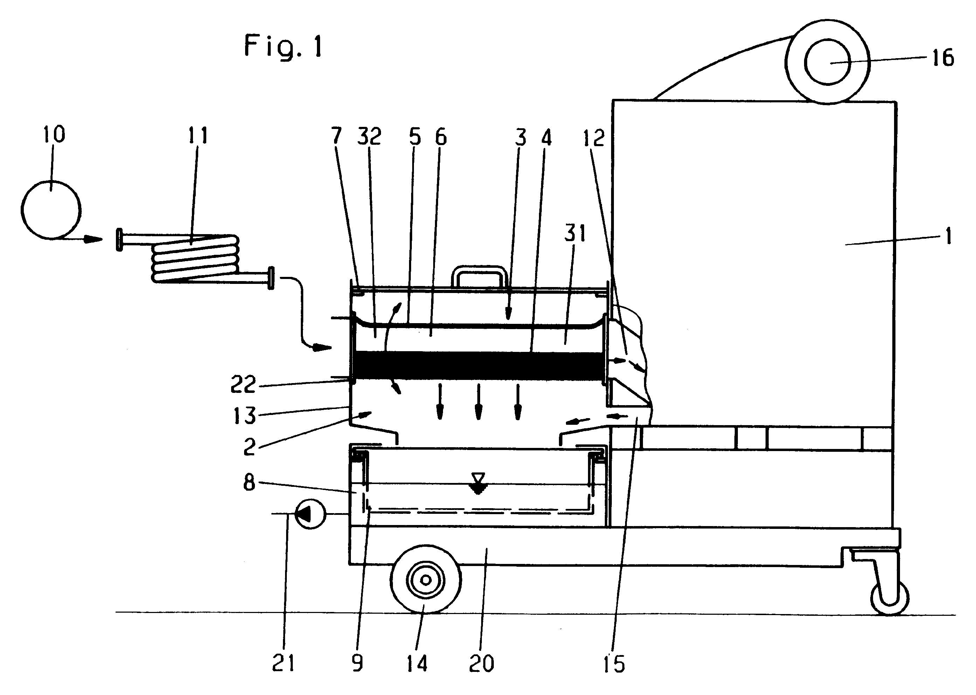

Wie der Fig. 1 entnommen werden kann ist die Granulatnachbehandlungsanlage, bestehend aus einem Trockner 1, Einlaufkasten 2 mit Drehrohr 31 und dem mit Siebkassetten 9 versehenen Wassertank 8, auf einem mit Rollen 14 versehenen Gestell 20 angeordnet. Die Verbindung zur Granuliereinrichtung 10 ist über einen geschichteten, durchsichtigen und flexiblen Schlauch 11 hergestellt. Der Kühlwasserrücklauf 21 vom Wassertank 8 zur Granuliereinrichtung 10 ist nicht näher dargestellt. Mit 15 ist der Entwässerungsausgang des Trockners 1 zum Wassertank 8 und mit 16 der Austrag für das getrocknete Granulat bezeichnet.

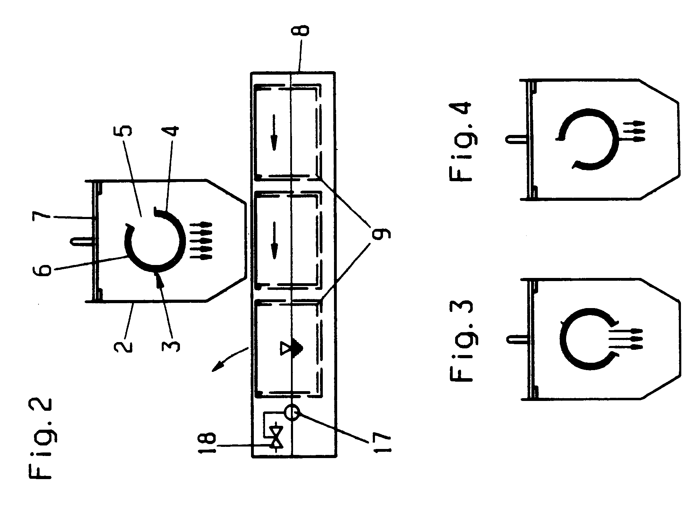

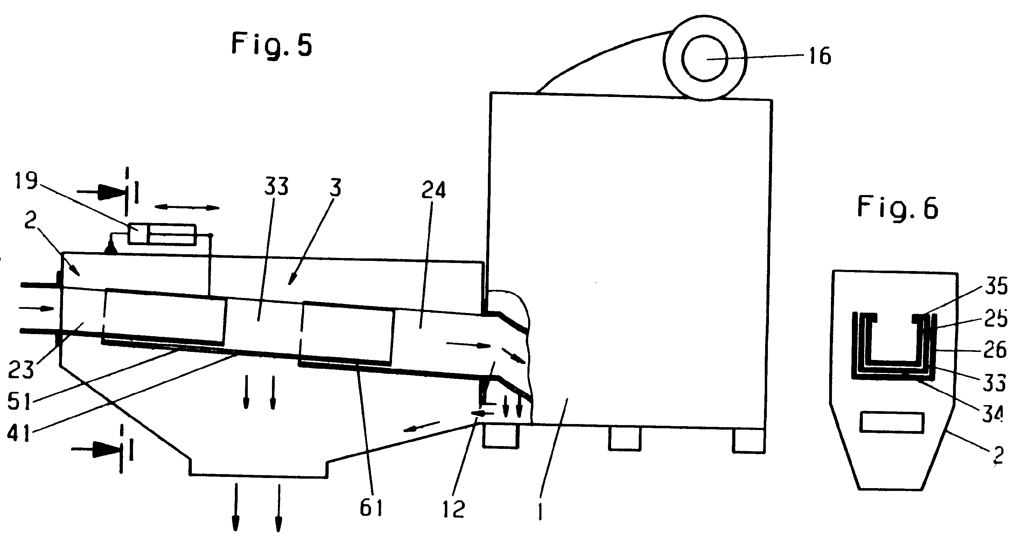

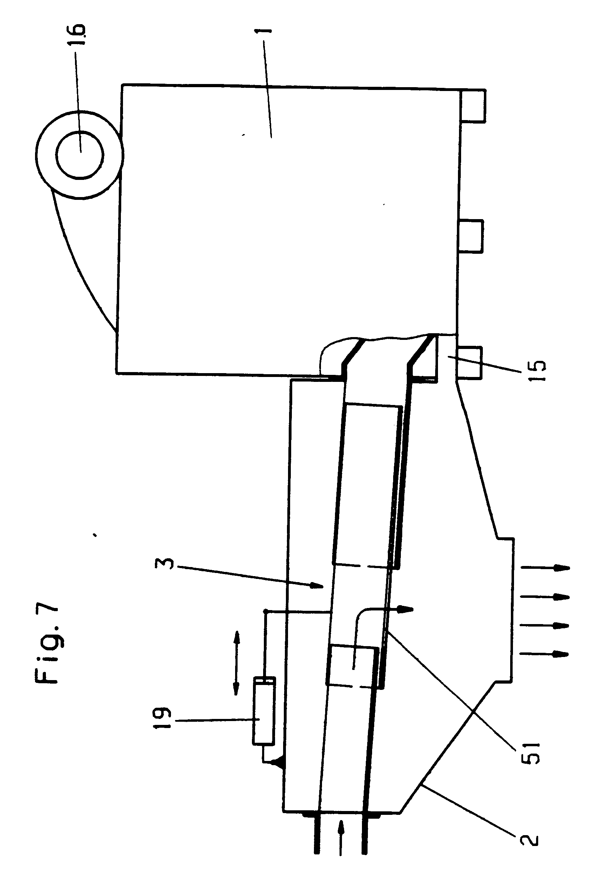

Der Einlaufkasten 2 ist oben mit einem abnehmbaren Deckel 7 versehen. Dadurch ist eine Sichtkontrolle und eine Verstellung des mittels Lager 22 an den Stirnseiten 13 des Einlaufkastens 2 gelagerten Drehrohres 31 gegeben. In den Figuren 2 bis 4 sind die einzelnen Stellungen für die Verentwässerung, Fehlgranulatableitung und Teilvorentwässerung dargestellt. Die Entsorgung erfolgt dabei immer in den Wassertank 8, dessen Wasserstandshöhe über Schwimmer 17 und Ventil 18 einstellbar ist. Die als Flusenfilter und Fehlgranulatauffangbehälter gestaltete Siebkassette 9 ist als Durchschiebekassette im Wassertank 8 austauschbar angeordnet.
Für Nachbehandlungsanlagen mit großen Durchsatzleistungen ist es vorteilhaft, wenn das Bauteil 3 als verschiebbare U-förmige Rinne 33 (Fig. 5 bis 7) ausgebildet ist. Der Boden 34 der Rinne 33 ist dabei in Längsrichtung nacheinander als Schlitz 51, Lochblech 41 und Vollboden 61 ausgebildet. Für die Lagerung der Rinne 33 sind im Einlaufkasten 2 jeweils eine U-förmige Einlaufrinne 23 und Auslaufrinne 24 fest angeordnet.

Zur Vermeidung von Transportstörungen ist die Einlaufrinne 23 kleiner und die Auslaufrinne 24 größer als die verschiebbare Rinne 33 ausgebildet. Die Rinne 33 ist mittels hakenförmigen Wulsten 35 in den Seitenwänden 25 der Einlaufrinne 23 verschiebbar eingehangen. Für die Verschiebung ist ein Hydraulikzylinder 19 auf dem Einlaufkasten 2 angeordnet, der mit der Rinne 33 in Wirkungsverbindung steht.
Die Rinne 33 sowie die Einlauf- und Auslaufrinne 23, 24 sind nicht an eine U-förmige Form gebunden, als Bauteil 3 können auch beliebig andere verschiebbare Rinnenformen Verwendung finden.

Die Wirkungsweise der Anlage ist wie folgt:

Das aus der Granuliereinrichtung 10 geförderte Granulat-Wassergemisch gelangt über den als Kühlstrecke ausgebildeten flexiblen Schlauch 11 in den Einlaufkasten 2 des Trockners 1.
Beim Anfahrprozeß ist der Schlitz 5 des Drehrohres 31 nach unten zum Wassertank 8 (Fig. 3) hinweisend gestellt, so daß das ankommende Fehlgranulat-Wassergemisch in die Siebkassette 9 des Wassertankes 8 geleitet wird. Sobald ein reguläres Granulat-Wassergemisch durch den Schlauch 11 gefördert wird, wird das Lochblech 4 des Drehrohres 31 nach unten (Fig. 3) oder teilweise nach unten (Fig. 4) gestellt und somit eine volle oder teilweise Vorentwässerung des Granulates vor dem Eintritt in den Trockner 1 erzielt. Die Einstellung der Vorentwässerung ist von 0 bis nahezu 100% möglich und wird in Abhänigkeit der Eigenschaften des nachzubehandelnden Granulates eingestellt.
Im Tockner 1 wird das Granulat auf den gewünschten Trocknungsfaktor getrocknet und das trockene Granulat verläßt über den Austrag 16 den Trockner 1. Das hierbei im Trockner 1 abgeschiedene Granulatwasser und die darin enthaltenen Flusen gelangen über den Entwässerungsausgang 15 in den Wassertank 8. Die Flusen werden in der Siebkassette 9 aufgefangen bevor das Wasser der Granuliereinrichtung 10 als Kühlwasser wieder zugeführt wird. Sobald eine Siebkassette 9 mit Flusen und/oder Fehlgranulat verunreinigt ist, wird diese durch eine neue Kassette ersetzt und die volle Kassette kann nach der Entnahme aus dem Wassertank 8 gereinigt werden. Durch die gegebene Verfahrbarkeit der Granulatnachbehandlungsanlage ist die Zustellung zur Granuliereinrichtung 10 in beliebiger Stellung und Entfernung gegeben. Durch den geschichteten flexiblen Schlauch 11 kann die Kühlwasserstrecke dem jeweiligen Granulattyp exakt angepaßt werden.
Die Wirkungsweise beim Einsatz der verschiebbaren Rinne 33 als Bauteil 3 (Fig. 5-7) ist analog wie beim vorstehend beschriebenen Drehrohr 31, nur daß an Stelle der Verdrehung eine Verschiebung der Rinne 33 für die einzelnen Entsorgungsstufen des Granulat-Wassergemisches erforderlich ist. Durch beide Bauteile, dem Drehrohr 31 oder der Rinne 33, ist durch die kompakte Bauweise und Zusammenfassung der Funktionen, Anfahrweiche und Granulatvorentwässerung sowie der gemeinsamen Entsorgung, einschließlich des Trockners, über eine Siebkassette in nur einem Wassertank eine raumsparende Bauweise gegenüber dem bekannten Stand der Technik für die Nachbehandlung von Kunststoffgranulat gegeben.
Zusätzlich ist der Grad der Vorentwässerung stufenlos einstellbar.

## Patentansprüche

1. Granulatnachbehandlungseinrichtung insbesondere zur Nachbehandlung von Kunststoffgranulat, welches nach der Granuliereinrichtung über eine Anfahrweiche und Vorentwässerungseinrichtung einem Trockner zugeführt wird, dadurch gekennzeichnet, daß die Anfahrweiche als Vorentwässerungseinrichtung ausgebildet ist und aus einem einteiligen verdreh- und/oder verschiebbaren Bauteil (3) besteht, das in einem mit dem Eingang (12) und Entwässerungsausgang (15) des Trockners (1) verbundenen Einlaufkasten (2) und über einem mit austauschbaren Siebkassette (9) ausgebildeten Wassertank (8) angeordnet ist.

2. Granulatnachbehandlungsanlage nach Anspruch 1, dadurch gekennzeichnet, daß das im Einlaufkasten (2) angeordnete Bauteil (3) aus einem an den Stirnwänden (13) des Einlaufkastens (2) gelagerten Drehrohr (31) besteht, dessen Mantel (32) aus 3 Segmenten (4, 5, 6), bestehend aus Lochblech (4), Schlitz (5) und Vollmantelblech (6), gebildet ist.

3. Granulatnachbehandlungsanlage nach Ansprüchen 1 und 2, dadurch gekennzeichnet, daß die Segmente (4, 5, 6) sich über die Gesamtlänge des Mantels (32) erstrecken, wobei dieser in Umfangsrichtung bis zu 180 Winkelgrad für das Lochblech (4) und bis zu 60 Winkelgrad für den Schlitz (5) aufgeteilt ist.

4. Granulatnachbehandlungsanlage nach Anspruch 1, dadurch gekennzeichnet, daß der Entwässerungsausgang (15) des Trockners (1) mit dem Wassertank (8) verbunden ist.

5. Granulatnachbehandlungsanlage nach einem der Ansprüche 1-4, dadurch gekennzeichnet, daß die Granulatnachbehandlungsanlage fahrbar auf Rollen (14) angeordnet ist und mit der Granuliereinrichtung (10) über einen spiralförmig geschichteten flexiblen Schlauch (11) in Wirkungsverbindung steht.

6. Granulatnachbehandlungsanlage nach Anspruch 1, dadurch gekennzeichnet, daß das Bauteil (3) aus einer U-förmigen Rinne (33) besteht, deren Boden (34) in Längsrichtung nacheinander als Schlitz (51), Lochblech (41) und Vollboden (61) ausgebildet ist, wobei für die verschiebbare Lagerung U-förmige Einlauf- und Auslaufrinnen (23, 24) an den Stirnseiten (13) im Einlaufkasten (2) fest angeordnet sind.

7. Granulatnachbehandlungsanlage nach Anspruch 6, dadurch gekennzeichnet, daß die Rinne (33) an den Seitenwänden (25) und/oder (26) der Einlauf- und/oder Auslaufrinne (23,24) mittels hakenförmiger Wulste (35) eingehangen ist.

8. Granulatnachbehandlungsanlage nach Anspruch 1 oder 6, dadurch gekennzeichnet, daß zur Verschiebung des Bauteiles (3) ein mit diesem in Wirkungsverbindung stehender Hydraulikzylinder (19) auf dem Einlaufkasten (2) angeordnet ist.

## Claims

1. Equipment for after-treatment of granulate, especially for the after-treatment of synthetic material granulate, which after the granulating equipment is fed by way of a delivery diverter and preliminary drying equipment to a drier, characterised thereby that the delivery diverter is constructed as preliminary drying equipment and consists of a unitary rotatable and/or displaceable constructional unit (3), which is arranged in an inflow box (2), which is connected with the inlet (12) and drainage outlet (15) of the drier (1) and above a water tank (8) constructed with an exchangeable filter cassette (9).

2. Installation for after-treatment of granulate according to claim 1, characterised thereby that the constructional unit (3) arranged in the inflow box (2) consists of a rotary pipe (31), which is mounted at the end walls (13) of the inflow box (2) and the shell (32) of which is formed from three segments (4, 5, 6), consisting of perforated plate (4), slot (5) and entire shell plate (6).

3. Installation for after-treatment of granulate according to claims 1 and 2, characterised thereby that the segments (4, 5, 6) extend over the entire length of the shell (32), wherein in circumferential direction this is divided into up to 180 degrees of angle for the perforated plate (4) and up to 60 degrees of angle for the slot (5).

4. Installation for after-treatment of granulate according to claim 1, characterised thereby that the drainage outlet (15) of the drier (1) is connected with the water tank (8).

5. Installation for after-treatment of granulate according to one of claims 1 to 4, characterised thereby that the installation for after-treatment of granulate is arranged to be movable on rollers (14) and stands in operative connection with the granulating equipment (10) by way of a helically layered flexible hose (11).

6. Installation for after-treatment of granulate according to claim 1, characterised thereby that the constructional unit (3) consists of a U-shaped chute (33), the base (34) of which is constructed successively in longitudinal direction as slot (51), perforated plate (41) and entire base (61), wherein U-shaped inlet and outlet chutes (23, 24) are, for the displaceable mounting, fixedly arranged in the inflow box (2) at the ends (13).

7. Installation for after-treatment of granulate according to claim 6, characterised thereby that the chute (33) is suspended at the side walls (25 and/or 26) of the inlet and/or outlet chute (23, 24) by means of a hook-shaped bead (35).

8. Installation for after-treatment of granulate according to claim 1 or 6, characterised thereby that a hydraulic cylinder (19), which stands in operative connection with the constructional unit (3), is arranged on the inflow box (2) for the displacement of the unit.

## Revendications

1. Dispositif de post-traitement de granulés, en particulier pour le post-traitement d'un granulat de matière plastique qui est délivré à un séchoir, en aval du dispositif de granulation, par l'intermédiaire d'un aiguillage d'arrivée et d'un dispositif de déshydratation préalable, caractérisé par le fait que l'aiguillage d'arrivée est réalisé sous la forme d'un dispositif de déshydratation préalable et consiste en une partie constitutive monobloc (3) qui peut tourner et/ou coulisser, est logée dans un caisson d'admission (2) relié à l'entrée (12) et à la sortie de drainage (15) du séchoir (1), et est implantée au-dessus d'un réservoir d'eau (8) réalisé muni de cartouches de tamisage (9) interchangeables.

2. Appareil de post-traitement de granulés, selon la revendication 1, caractérisé par le fait que la partie constitutive (3) logée dans le caisson d'admission (2) consiste en un tube rotatif (31),qui est monté sur les parois extrêmes (13) dudit caisson d'admission (2), et dont l'enveloppe (32) se compose de 3 segments (4, 5, 6) comprenant une tôle perforée (4), une fente (5) et une tôle de chemisage pleine (6).

3. Appareil de post-traitement de granulés, selon les revendications 1 et 2, caractérisé par le fait que les segments (4, 5, 6) s'étendent sur toute la longueur de l'enveloppe (32), cette dernière étant scindée, dans le sens périphérique, jusqu'à 180 degrés d'angle pour la tôle perforée (4) et jusqu'à 60 degrés d'angle pour la fente (5).

4. Appareil de post-traitement de granulés, selon la revendication 1, caractérisé par le fait que la sortie de drainage (15) du séchoir (1) est raccordée au réservoir d'eau (8).

5. Appareil de post-traitement de granulés, selon l'une des revendications 1-4, caractérisé par le fait que cet appareil de post-traitement de granulés est agencé mobile sur des roulettes (14), et est en liaison interactive avec le dispositif de granulation (10) par l'intermédiaire d'un tuyau flexible (11) enroulé spiroïdalement sur lui-même.

6. Appareil de post-traitement de granulés, selon la revendication 1, caractérisé par le fait que la partie constitutive (3) consiste en une rigole (33) configurée en U, dont le fond (34) est successivement conçu, dans le sens longitudinal, en tant que fente (51), tôle perforée (41) et fond plein (61), des rigoles d'afflux et d'écoulement (23, 24) configurées en U étant installées de manière fixe dans le caisson d'admission (2), sur les faces extrêmes (13), en vue du montage coulissant.

7. Appareil de post-traitement de granulés, selon la revendication 6, caractérisé par le fait que la rigole (33) est enchâssée, au moyen de renflements (35) en forme de crochets, sur les parois latérales (25) et/ou (26) de la rigole d'afflux et/ou d'écoulement (23, 24).

8. Appareil de post-traitement de granulés, selon la revendication 1 ou 6, caractérisé par le fait que, pour assurer le coulissement de la partie constitutive (3), un vérin hydraulique (19) en liaison interactive avec cette dernière est installé sur le caisson d'admission (2).
